# EUROPEAN PATENT APPLICATION

(11) **EP 3 056 380 A1**
(43) Date of publication of application: **17.08.2016**
(21) Application number: 13893644.8
(22) Date of filing: 10.09.2013
(51) Int. Cl.: B60M 7/00, B60L 11/18, H02J 50/00

(54) **CONTACTLESS POWER FEEDING SYSTEM, AND CONTACTLESS POWER FEEDING METHOD**

(71) Applicant: The Chugoku Electric Power Co., Inc., Hiroshima-shi, Hiroshima 730-8701 (JP)
(72) Inventor: OKUBO, Norihiro, Hiroshima-shi Hiroshima 730-8701 (JP)
(74) Representative: Moreland, David
(86) International application number: PCT/JP2013/074336
(87) International publication number: WO 2015/037046

(57) **Abstract**

[Problem] To prevent an unnecessary electromagnetic wave from being radiated from a power transmission element.

[Solution] In a wireless power transfer system that transmits power through electromagnetic wave from a power transmission element 21 of power transmission equipment to a power receiving element 11 of power receiving equipment; a shield 31 configured to shield the electromagnetic wave radiated from the power transmission element 21 is provided slidably along a movement surface 5 of a mobile object 10; a first magnet 33 is provided to the shield 31; an urging mechanism 32, which urges the shield 31 to slide in a direction of increasing a shielding effect for the power transmission element 21, is provided; a second magnet 18 is provided to the mobile object 10 at a predetermined distance away from the power receiving element 11; and the second magnet 18 is coupled to the first magnet 33 when the mobile object 10 approaches the power transmission element 21, to thereby couple the mobile object 10 and the shield 31 together, and the shield 31 is slid with a movement of the mobile object 10, to release shielding.

## Description

### [Technical Field]

The present disclosure relates to a wireless power transfer system and a wireless power transfer method.

### [Background Art]

Patent Literature 1 relates to a shielding technique in a power supply system that supplies power from a power source outside a vehicle to the vehicle in a wireless manner using a resonance method, and Patent Literature 1 describes that a shielding box is disposed such that an opening thereof is able to face a power supply unit, other five surfaces thereof reflect a resonant electromagnetic field (near field) generated around a power receiving unit when receiving power from the power supply unit, the power receiving unit is disposed in the shielding box, and power is received from the power supply unit through the opening portion of the shielding box.

Patent Literature 2 relates to an electrically powered vehicle which is capable of receiving power from a power supply device in a wireless manner by causing resonance between a resonator provided to each vehicle and the power supply device outside the vehicle through an electromagnetic field, and Patent Literature 2 describes that, in order to implement such a configuration, at low cost, that the leaked electromagnetic field generated when receiving power is shielded, a power reception unit, which includes a secondary self-resonant coil that receives power from a power transmission unit of a power supply device by resonating with a primary self-resonant coil included in the power transmission unit through an electromagnetic field, is disposed at the bottom of an engine room which stores a driving power generation unit including an engine and a motor generator; and a shielding material, made of a cloth, sponge, or the like, having an electromagnetic wave shielding effect, is provided to electromagnetically shield the engine room from inside and outside.

Patent Literature 3 relates to a method of shielding an electromagnetic wave in wireless power transfer system, and describes that unnecessary radiation of an electromagnetic wave is restrained and, in order to suppress reduction in power transport efficiency as much as possible, a power-transmission-side magnetic shielding member made of a magnetic material is disposed on the side opposite to the side of power transmission that is performed by a power transmission system coil in the power transmission system coil; an electric field shielding member made of a conductive material is disposed on the side orthogonal to a direction of power transmission performed by the power transmission system coil; and a power-reception-side magnetic shielding member made of a magnetic material is disposed on the side opposite to the side of power reception performed by a power reception system coil in the power reception system coil.

### [Citation List]

### [Patent Literature]

[Patent Literature 1] Japanese Patent Application Laid-open Publication No. 2011-91999
[Patent Literature 2] Republication of PCT International Publication No. WO2010/041320
[Patent Literature 3] Japanese Patent Application Laid-open Publication No.2011-45189

### [Summary of Invention]

### [Technical Problem]

Wireless power transfer is a technique of transferring power in space through an electromagnetic wave (high-frequency electromagnetic field), and when power is supplied from a power transmission element to a power receiving element, the electromagnetic wave is inevitably radiated into space from the power transmission element (a coil, an antenna, or the like) serving as a wave source. This electromagnetic wave radiated from the power transmission element causes noise in electronic equipment, and might affect human bodies. Further, the strength in electromagnetic wave is stipulated by Radio Act, and the like. Thus, when wireless power transfer is performed, it is required that an unnecessary electromagnetic wave radiated from the power transmission element are restrained as much as possible.

The present disclosure has been made in view of such background, and an object thereof is to provide a wireless power transfer system and a wireless power transfer method capable of reliably transmitting (supplying) power from a power transmission element to a power receiving element, while shielding radiation of an unnecessary electromagnetic wave from the power transmission element, in wireless power transfer.

### [Solution to Problem]

In order to address the above problem, one aspect of the present disclosure is directed to a wireless power transfer system including: a power receiving element provided to a mobile object and configured to receive power transmitted through wireless power transfer, the mobile object being configured to move along a movement surface; a power transmission element embedded on a movement surface side and configured to transmit the power; a shield provided in a manner slidable along the movement surface so as to shield an electromagnetic wave radiated from the power transmission element; a first magnet provided to the shield; an urging mechanism configured to urge the shield to slide in a direction in which a shielding effect for the power transmission element is increased; and a second magnet provided to the mobile object at a predetermined distance from the power receiving element, the second magnet being configured to, when the mobile object approaches the power transmission element, become coupled to the first magnet, to couple the mobile object and the shield together.

According to the present disclosure, when the mobile object approaches the power transmission element, the first magnet provided to the shield and the second magnet provided to the mobile object at the predetermined distance from the power receiving element are coupled to each other, which causes the shield to be coupled to the mobile object, and with the movement of the mobile object (due to the kinetic energy of the mobile object), the shield slides against the urging force, to automatically release shielding of the power transmission element. Thus, while the mobile object is at a location away from the power transmission element, an unnecessary electromagnetic wave radiated from the power transmission element can reliably be shielded, and while the mobile object approaches the power transmission element, shielding by the shield can automatically be released, to reliably supply power from the power transmission element to the power receiving element.

Another aspect of the present disclosure is directed to the wireless power transfer system, in which the first magnet is provided near a periphery of the shield, and the predetermined distance between the second magnet and the power receiving element is at least equal to or greater than a maximum diameter of an electromagnetic wave radiating surface of the power transmission element.

In a case where the first magnet is provided near the periphery of the shield, it is preferable that the predetermined distance between the second magnet and the power receiving element is at least equal to or greater than the maximum diameter of the electromagnetic-wave radiating surface of the power transmission element. With such a configuration, when the mobile object approaches the power transmission element from the direction of the second magnet, the second magnet and the first magnet are coupled to each other first, and when the power receiving element passes right over the power transmission element, the shielding effect by virtue of the shield is reduced at the highest possible degree, and thus power can efficiently be supplied from the power transmission element to the power receiving element.

Another aspect of the present disclosure is the wireless power transfer system, which further includes a power transmission supply device configured to supply power to the power transmission element only when an amount of sliding of the shield exceeds a predetermined threshold, the shield being configured to slide against the urging force with a movement of the mobile object.

Accordingly, a configuration is made such that power is supplied to the power transmission element only when the amount of sliding of the shield exceeds the predetermined threshold, and thus radiation of an unnecessary electromagnetic wave from the power transmission element can be shielded more reliably.

Another aspect of the present disclosure is the wireless power transfer system, which further includes a plurality of shields provided in a manner slidable in directions different from one another, the shield including the plurality of shields.

Accordingly, since the power transmission element is shielded with a plurality of shields that are provided in a manner slidable in the directions different from one another, such cases can be handled that the mobile object approaches power transmission element from a plurality of directions, and shielding can reliably be released in response to the mobile object approaching the power transmission element from various directions, and thus wireless power transfer can reliably be performed.

Another aspect of the present disclosure is the wireless power transfer system, wherein a plurality of first magnets are provided near a periphery of the shield, the first magnet including the plurality of first magnets, a plurality of power receiving elements are provided around the second magnet of the mobile object, the power receiving element including the plurality of power receiving elements, and the predetermined distance between the second magnet and each of the power receiving elements is equal to or smaller than a maximum diameter of an electromagnetic wave radiating surface of the power transmission element.

With such a configuration, it is possible to release the shielding by reliably sliding the shield in a case where the mobile object approaches the power transmission element in any direction, thereby being able to reliably perform wireless power transfer.

Other problems and solutions thereof disclosed in the present application will become clear from the description of embodiments and the drawings.

### [Advantageous Effects of Invention]

According to the present disclosure, in wireless power transfer, power can reliably be supplied from a power transmission element to a power receiving element while radiation of an unnecessary electromagnetic wave from the power transmission element being shielded.

### [Brief Description of the Drawings]

Fig. 1 is a diagram illustrating a schematic configuration of a wireless power transfer system 1 according to a first embodiment.
Fig. 2A is a diagram explaining an operation of a shield 31.
Fig. 2B is a diagram explaining an operation of a shield 31.
Fig. 2C is a diagram explaining an operation of a shield 31.
Fig. 2D is a diagram explaining an operation of a shield 31.
Fig. 2E is a diagram explaining an operation of a shield 31.
Fig. 3 is a diagram explaining a configuration around a power transmission element 21 and a shield 31 in a wireless power transfer system 1 according to a second embodiment.
Fig. 4 is a diagram explaining a configuration around a power receiving element 11 in a wireless power transfer system 1 according to a second embodiment.
Fig. 5 is a diagram explaining a configuration around a power transmission element 21 and a shield 31 in a wireless power transfer system 1 according to a third embodiment.
Fig. 6 is a diagram explaining a configuration around a power receiving element 11 in a wireless power transfer system 1 according to a third embodiment.
Fig. 7 is a diagram explaining a function of a wireless power transfer system 1 according to a third embodiment.
Fig. 8 is a diagram explaining a configuration around a power transmission element 21 and a shield 31 in a wireless power transfer system 1 according to a fourth embodiment.
Fig. 9 is a diagram explaining a configuration around a power receiving element 11 in a wireless power transfer system 1 according to a fourth embodiment.
Fig. 10 is a diagram explaining a function of a wireless power transfer system 1 according to a fourth embodiment.
Fig. 11 is a diagram explaining another configuration around a power transmission element 21 and a shield 31 in a wireless power transfer system 1 according to a fourth embodiment.
Fig. 12 is a diagram explaining another configuration around a power receiving element 11 in a wireless power transfer system 1 according to a fourth embodiment.

### [Description of Embodiments]

An embodiment will hereinafter be described in detail with reference to drawings. Note that, in the following descriptions, the same or similar components are given the same reference numerals, and descriptions thereof may be omitted.

### [First Embodiment]

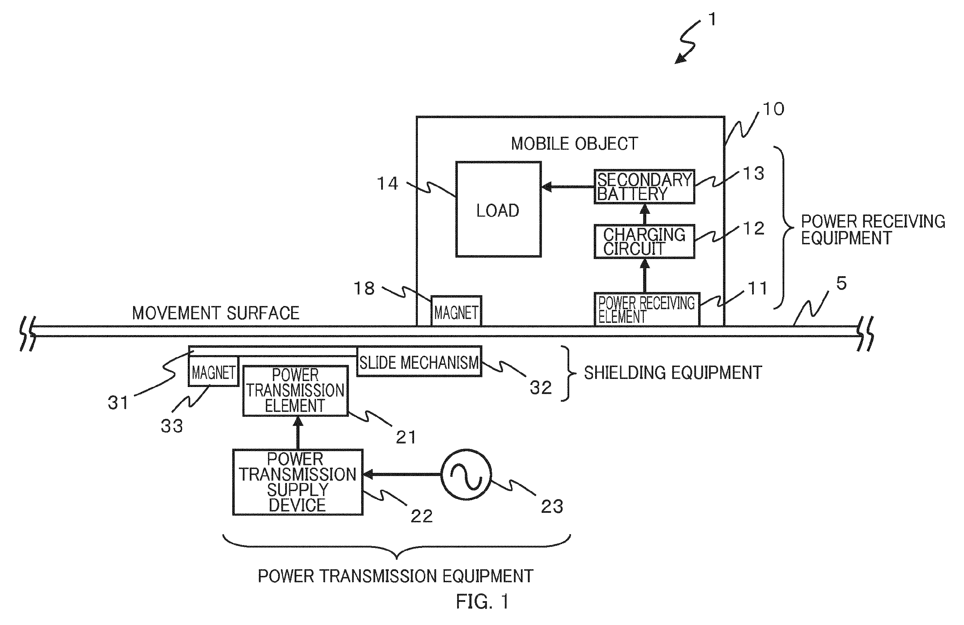

Fig. 1 illustrates a schematic configuration of a wireless power transfer system 1 which will be described as a first embodiment. The wireless power transfer system 1 includes: a mobile object 10 configured to move along a floor surface, a ground surface, or the like, (hereinafter, referred to as a movement surface 5) ; power receiving equipment provided to the mobile object 10 and configured to receive power through wireless power transfer; power transmission equipment provided on the movement surface 5 side and configured to transmit power to the power receiving equipment through wireless power transfer; and shielding equipment provided to the movement surface 5 side and configured to shield an electromagnetic wave radiated from the power transmission equipment.

The mobile object 10 is, for example, an electric vehicle, a cargo transportation vehicle, a vacuum cleaner, a robot, or the like. The mobile object 10 is provided with electric/electronic equipment and mechanical equipment that are configured to be operated using power transmitted through wireless power transfer. Note that a wireless power transfer system includes an electromagnetic wave type, a magnetic resonance type, an electromagnetic induction type, etc., and a mechanism which will be described hereinafter can be applied to any type of the wireless power transfer system.

The aforementioned power receiving equipment configuring the wireless power transfer system 1 includes a power receiving element 11, a charging circuit 12, a secondary battery 13, a load 14, and at least one magnet 18 (second magnet) (e.g., permanent magnet (alnico magnet, ferrite magnet, neodymium magnet, etc.,)). The power receiving element 11 is configured to convert energy in the form of an electromagnetic wave, which propagates in space, into electric energy, and is, for example, a coil or an antenna. The charging circuit 12 includes, for example, a rectifier circuit configured to rectify power received by the power receiving element 11, a control circuit configured to control charging/discharging of a secondary battery, or the like. The secondary battery 13 is, for example, a lithium-ion secondary battery, a lithium-ion polymer secondary battery, an electric double layer capacitor, or the like. The load 14 is, for example, an electric/electronic circuit, a mechanical device, a motor, or the like, and is operated utilizing power stored in the secondary battery 13. A magnet 18 is provided at a location facing the movement surface 5 of the mobile object 10. The magnet 18 is configured to, when the mobile object 10 approaches a power transmission element 21 which will be described later, become coupled to a magnet 33 (first magnet) that is provided on the shield 31 side which will be described later, to couple the mobile object 10 and the shield 31 together.

The aforementioned power transmission equipment configuring the wireless power transfer system 1 includes the power transmission element 21 and a power transmission supply device 22. The power transmission element 21 is configured to transfer electric energy into energy in the form of an electromagnetic wave, which propagates in space, and is, for example, a coil, an antenna, or the like. The power transmission supply device 22 is configured to supply power (power required to radiate an electromagnetic wave from the power transmission element 21) to the power transmission element 21. The power transmission supply device 22 includes: for example, a rectifier device configured to rectify an alternating current supplied from a commercial power source 23; an inverter circuit configured to generate a high-frequency current that is to be supplied to the power transmission element 21 based on a direct current rectified by a rectifier device; and the like. Note that at least the power transmission element 21 out of components of the power transmission equipment is embedded closer to the movement surface 5 so as to be reliably coupled to the magnet 18 provided on the mobile object 10 side when the mobile object 10 approaches the power transmission element 21.

The aforementioned shielding equipment configuring the wireless power transfer system 1 includes the shield 31, a slide mechanism 32, and the magnet 33. The shield 31 is made of a material such as an aluminum plate having properties of shielding an electromagnetic wave radiated from the power transmission element 21. The shield 31 is provided such that the surface thereof is made parallel to the movement surface 5 so as to be able to efficiently attenuate the electromagnetic wave which is radiated from the power transmission element 21 embedded on the movement surface 5 side toward a space (a space above the movement surface 5). The slide mechanism 32 is configured to slide the shield 31 along the movement surface 5, as well as includes an urging mechanism configured to urge the shield 31 to slide in a predetermined direction. The slide mechanism 32 is implemented, for example, by a rail mechanism configured to slidably support both sides of the shield 31. For example, an elastic body such as spring, rubber, etc., is used to implement the urging mechanism. An urging force acting on the shield 31 increases with an increase in the amount of sliding of the shield 31. The magnet 33 is provided, near the periphery of the shield 31, at a location facing the side on which the mobile object 10 passes. The magnet 33 is configured to, when the mobile object 10 approaches, become coupled to the magnet 18 on the mobile object 10 side, thereby coupling the shield 31 and the mobile obj ect 10 with each other. Thus, the surfaces, facing each other, of the magnet 33 on the shield 31 side and the magnet 18 on the mobile object 10 side have opposite polarities (the north pole and the south pole, or the south pole and the north pole). Note that it is preferable to select, as the magnet 18 and the magnet 33, magnets having such coupling forces as not to excessively attenuate the kinetic energy of the mobile object 10 with the magnets being coupled together.

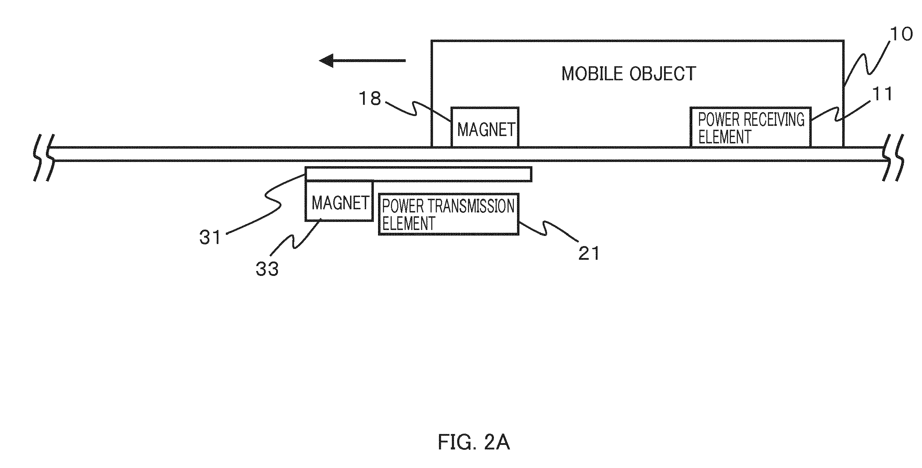

When the mobile object 10 passes the power transmission element 21, the shield 31, which is a component of the shielding equipment, is coupled to the mobile object 10, with the magnet 18 and the magnet 33 being coupled, thereby sliding automatically (utilizing the kinetic energy of the mobile object 10) in association with the movement of the mobile object 10. Hereinafter, a sliding operation of the shield 31 will be described with reference to Figs. 2A to 2E. Note that Figs. 2A to 2E illustrate only the components necessary for explanations among the components of the wireless power transfer system 1. Further, unless otherwise noted, the power transmission supply device 22 supplies power to the power transmission element 21 and the electromagnetic wave is radiated from the power transmission element 21.

Fig. 2A illustrates a state where the mobile object 10 moves on the movement surface 5 to come close to the power transmission element 21. As illustrated in the drawing, the shield 31 is completely closed at this stage, and the electromagnetic wave radiated from the power transmission element 21 is shielded at the highest possible degree by the shield 31.

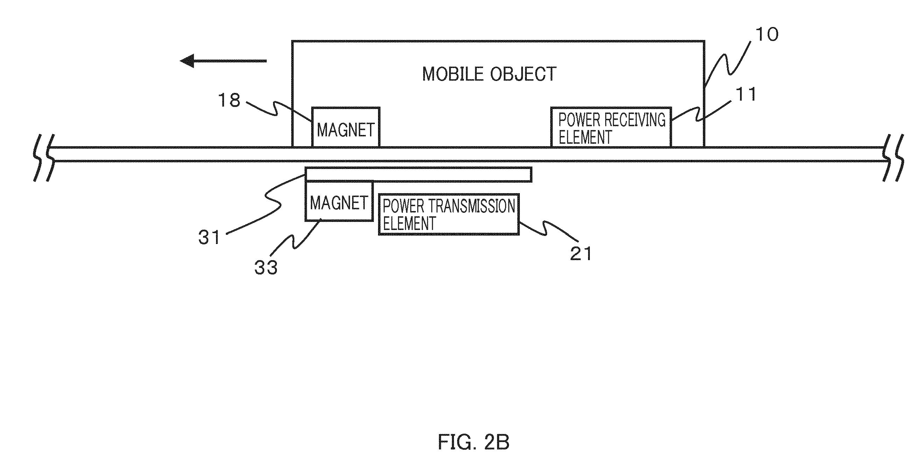

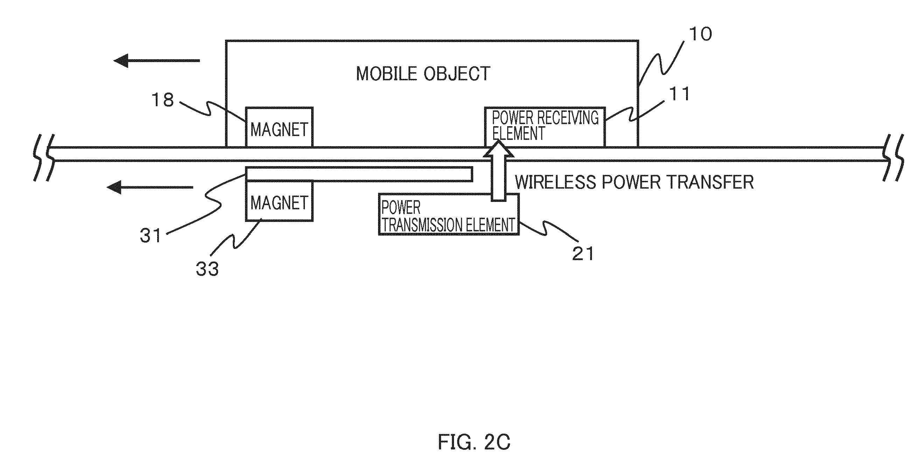

Subsequently, as illustrated in Fig. 2B, when the mobile object 10 approaches the power transmission element 21, the magnet 18 on the mobile object 10 side and the magnet 33 on the power transmission element 21 side are coupled with each other, which causes the shield 31 to be coupled to the mobile object 10, and with the movement of the mobile object 10, the shield 31 starts to slide against the urging force of the urging mechanism. Then, as illustrated in Fig. 2C, shielding of the power transmission element 21 is gradually released with the shield 31 sliding, thereby starting to supply power from the power transmission element 21 to the power receiving element 11. Note that a configuration may be made such that a sensor is provided which detects that the amount of sliding of the shield 31 has exceeded the predetermined threshold, and that when it is detected that the amount of sliding has exceeded the predetermined threshold, the radiation of the electromagnetic wave from the power transmission element 21 (power supply to the power transmission element 21 by the power transmission supply device 22) is started.

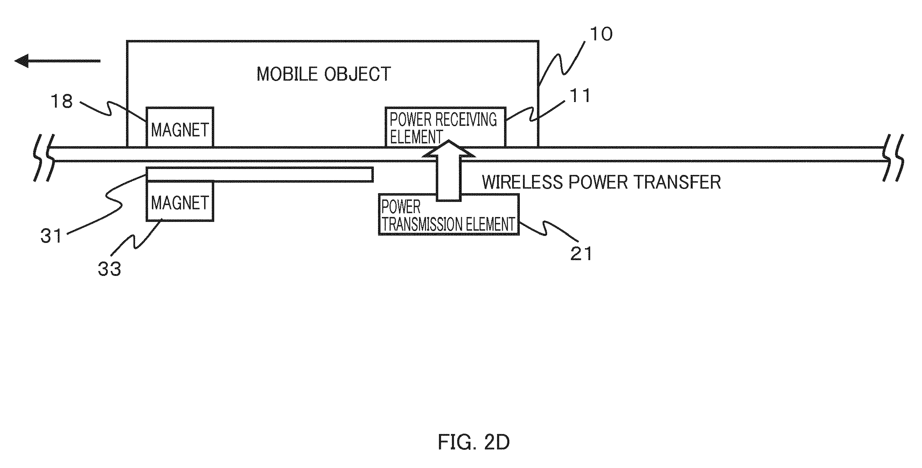

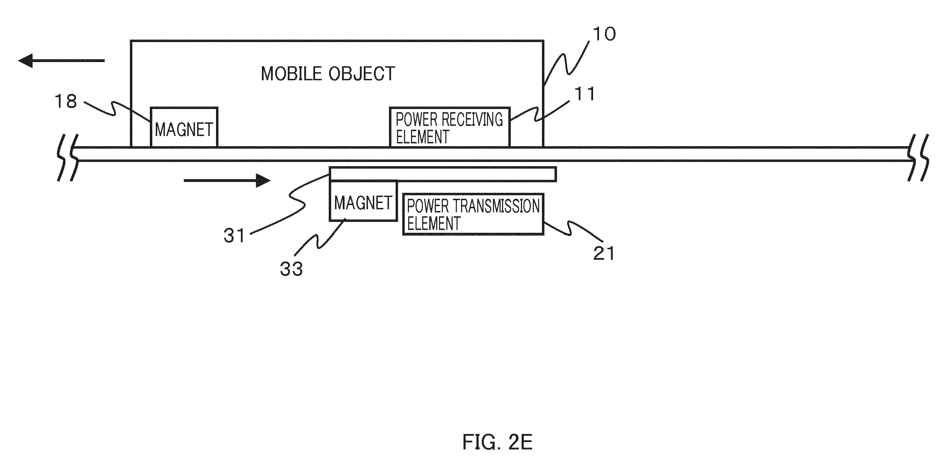

Subsequently, as illustrated in Fig. 2D, when the shield 31 further slides with the movement of the mobile object 10, coupling between the magnet 18 and the magnet 33 is released at the point at which the urging force has exceeded the coupling force between the magnet 18 and the magnet 33. As a result, as illustrated in Fig. 2E, the shield 31 returns to its original position, and again, the electromagnetic wave radiated from the power transmission element 21 is shielded at the highest possible degree by the shield 31.

Note that, in a case where the power receiving element 11 of the mobile object 10 passes over the power transmission element 21 at high speed, a time period during which the shield 31 is open is short. However, even if the time period during which shielding is released is short, for example, a battery having a small capacity is used as the secondary battery 13, or an electric double layer capacitor is employed as the secondary battery 13, thereby being able to supply the necessary amount of power from the power transmission element 21 to the power receiving element 11.

It is preferable that a distance between the magnet 18 provided to the mobile object 10 and the power receiving element 11 is at least equal to or greater than the maximum diameter of the electromagnetic-wave radiating surface of the power transmission element 21 (for example, a diameter of a circle when the radiating surface is in a circular shape, and a length of a diagonal line when in a rectangular shape). With this distance such a configuration is enabled that the mobile object 10 comes close to the power transmission element 21, to couple the magnet 18 and the shield 31 together in advance, and then at the time when the light receiving element 11 approaches right above the power transmission element 21, shielding for the power transmission element 21 by the shield 31 has already been released without fail. Thus, power can efficiently be efficiently supplied from the power transmission element 21 to the power receiving element 11.

As described hereinabove, with the wireless power transfer system 1 according to the first embodiment, when the mobile object 10 approaches the power transmission element 21 from a predetermined direction, the magnet 18 for the mobile object 10 and the magnet 33 for the shield 31 are coupled to each other to automatically slide the shield 31, thereby releasing the shielding of the electromagnetic wave radiated from the power transmission element 21, to start wireless power transfer from the power transmission element 21 to the power receiving element 11. Furthermore, with a further movement of the mobile object 10, the shield 31 automatically returns to its original position with the urging force, and again, the electromagnetic wave radiated from the power transmission element 21 is shielded at highest possible degree by the shield 31. Thus, at normal times (while the mobile object 10 is away from the power transmission element 21), unnecessary electromagnetic wave radiated from the power transmission element 21 can reliably be shielded, and when the mobile object 10 approaches the power transmission element 21, power can reliably be supplied from the power transmission element 21 to the power receiving element 11. Further, since the shield 31 is slid utilizing the kinetic energy of the mobile object 10, a complicated mechanism for sliding the shield 31 is not required to be provided separately, and a mechanism configured to reliably perform wireless power transfer while shielding the electromagnetic wave can be implemented with reduced energy and a simple configuration. Note that the above described power transmission equipment and the shielding equipment provided therewith may be provided at a plurality of locations in an area, where the mobile object 10 moves, in the movement surface 5.

### [Second Embodiment]

In a configuration of the wireless power transfer system 1 according to the first embodiment, in cases where the mobile object 10 approaches the power transmission element 21 in a direction different from a direction in which the shield 31 can slide, shielding cannot always be released. Then, in a wireless power transfer system 1 according to a second embodiment, a configuration is made such that shielding of a power transmission element 21 is released, even when a mobile object 10 approaches a power transmission element 21 from various (arbitrary) directions.

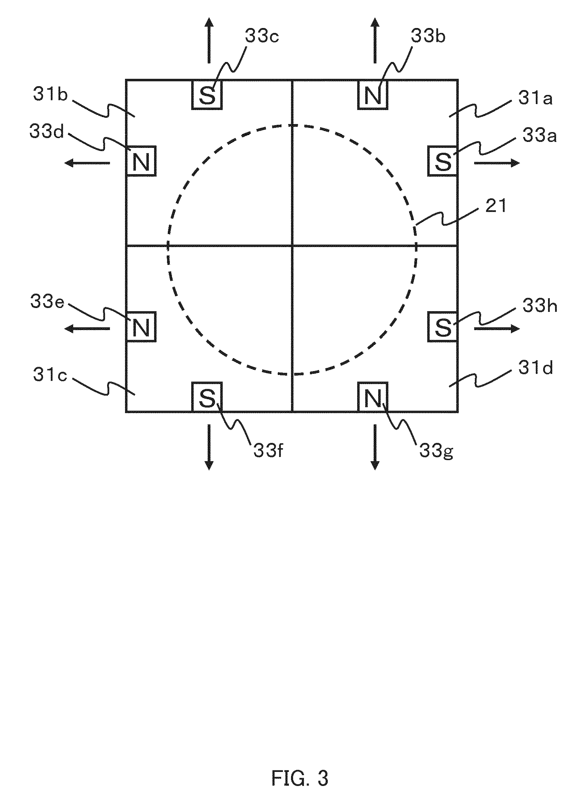

Fig. 3 is a diagram of a configuration, seen from above a movement surface 5, around the power transmission element 21 and shields 31 in the wireless power transfer system 1 which will be described as the second embodiment.

As illustrated in the drawing, in the wireless power transfer system 1 according to the second embodiment, four shields 31a-31d, each having a substantially square shape, which are arranged adjacent to one another to have a substantially square shape (this square shape is hereinafter referred to as the entire square shape) are provided in such a manner as to cover an electromagnetic-wave radiating surface of the single power transmission element 21. These four shields 31a-31d can be slid in directions (directions illustrated in arrows in the drawing) toward the outer contour lines of the entire square shape by slide mechanisms, not shown, which are respectively provided to the shields. Further, these four shields 31a-31d are urged in such a manner as to return in directions (directions opposite to the directions illustrated in the arrows in the drawing) toward the center of the entire square shape by an urging mechanism not shown, respectively.

Magnets 33 are embedded in (or fixed to the undersides of) the four shields 31a-31d, respectively. In Fig. 3, magnets 33a-33h are embedded in the four shields 31a-31d along the periphery of the entire square shape. Note that the number of the magnets 33, the locations at which the magnets 33 are provided, and the polarities of the magnets 33 on the side facing a mobile object 10 are not necessarily limited to the embodiment illustrated in the drawing, but are set in an appropriate state in view of the relationship with a configuration of the mobile object 10, which will be described later.

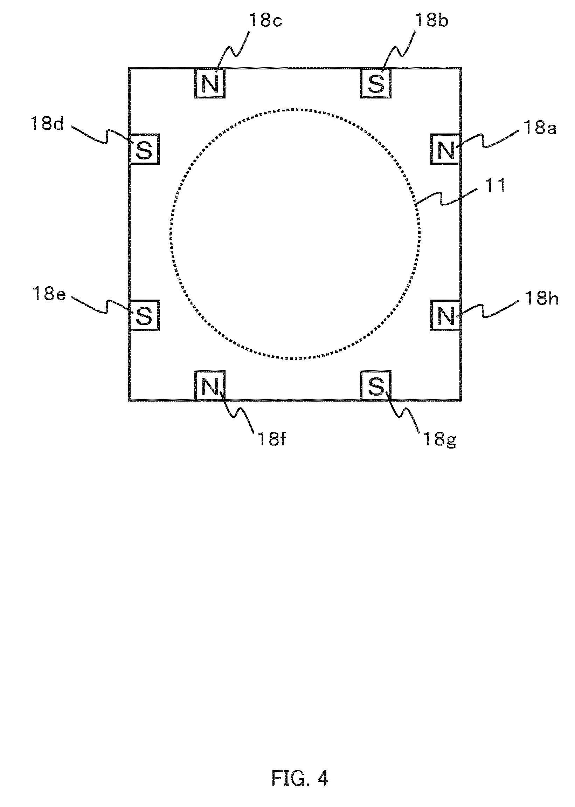

Fig. 4 is a diagram of a configuration, seen from above the mobile object 10, around a power receiving element 11 in the wireless power transfer system 1 which will be described as the second embodiment. As illustrated in the drawing, a plurality of magnets 18a-18h are provided around the single power receiving element 11. The power receiving element 11 and the power transmission element 21 are substantially the same in shape and size, and the magnets 18a-18h are provided to the mobile object 10 at such locations that the magnets 18 are superposed on the magnets 33, respectively, (the magnets 18a-18h correspond the magnets 33a-33h, respectively) when the power receiving element 11 is superposed on the power transmission element 21 such that the entire shapes thereof are superposed on each other.

In the wireless power transfer system 1 having the above configuration, when a mobile object 2 approaches the power transmission element 21, at least any of the magnets 18 on the mobile object 10 side and at least any of the magnets 33 on the power transmission element 21 side are coupled together, and coupled one or coupled ones of the shields 31a-31d slide with the movement of the mobile object 10, and as a result, shielding of the power transmission element 21 is released. Further, the coupled shield(s) 31 further move(s) and when coupling between the magnet(s) 18 and the magnet(s) 33 is released at last, the shield(s) 31 automatically return(s) to the original position (s) with the urging force, and the electromagnetic wave radiated from the power transmission element 21 is shielded again at the highest possible degree by the shield 31.

As such, with the wireless power transfer system 1 according to the second embodiment, it is possible to automatically release the shield 31's shielding of the electromagnetic wave when the mobile object 10 approaches the power transmission element 21 from various directions, and it is possible to reliably perform wireless power transfer when the mobile object 10 approaches the power transmission element 21, while, at normal times, reliably shield the electromagnetic wave.

In the second embodiment, the shapes and the sizes of the power receiving element 11 and the power transmission element 21 are not limited to those illustrated in the drawing. Further, the numbers, shapes, sizes, and arrangements of the magnets 18 and the magnets 33 are not limited to those illustrated in the drawing.

### [Third Embodiment]

A wireless power transfer system 1 illustrated as the third embodiment is configured for the purpose of improving power supply efficiency in a case where a power transmission element 21 and a power receiving element 11 have a predetermined radiating surface and a predetermined receiving surface, respectively, and the wireless power transfer system 1 is based on the configuration of the wireless power transfer system 1 according to the second embodiment.

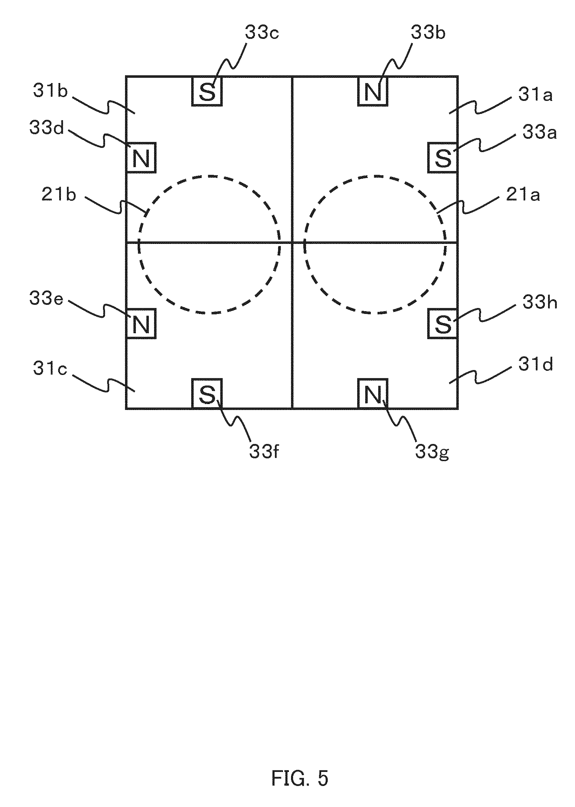

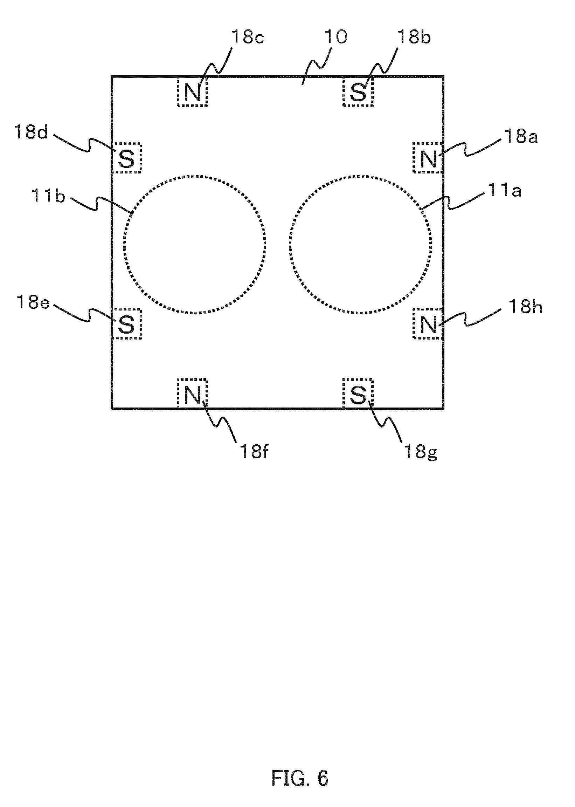

As illustrated in Fig. 5, in the wireless power transfer system 1 according to the third embodiment, the power transmission element 21 is configured with power transmission elements 21a, 21b (at least electromagnetic-wave radiating surfaces thereof are in a circular shape) of circular shapes, respectively, of the same size having a diameter about half the length of one side of the aforementioned entire square shape. Further, as illustrated in Fig. 6, the power receiving element 11 is configured with power receiving elements 11a, 11b (at least electromagnetic-wave receiving surfaces hereof are in a circular shape) of circular shapes, respectively, of the same size having a diameter about half the length of one side of the aforementioned entire square shape.

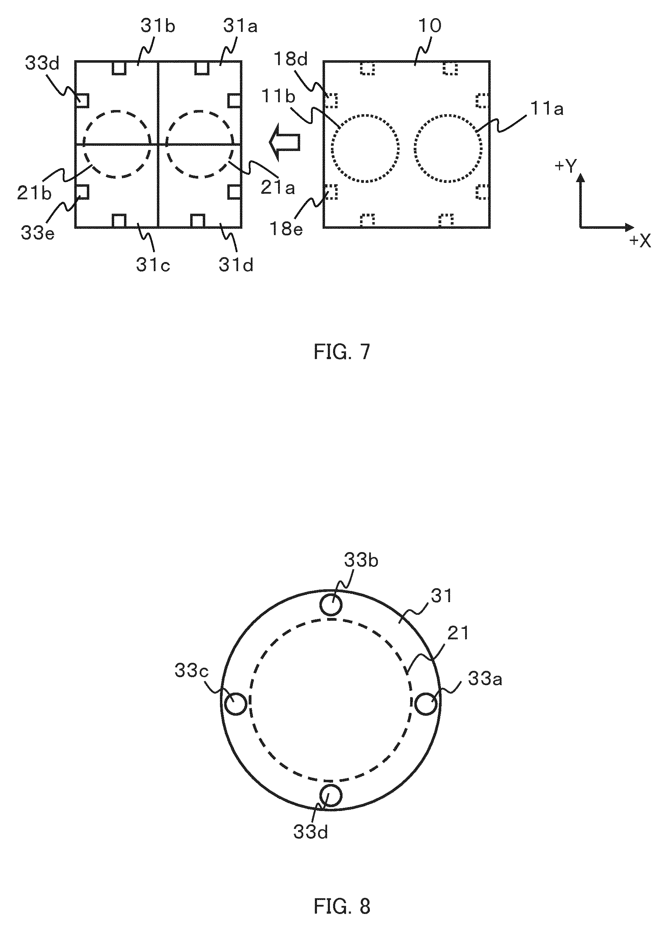

In a case where the power transmission element 21 and the power receiving element 11 are configured as such, they are functioned, for example, as illustrated in Fig. 7. That is to say, with the movement of a mobile object 10, the power receiving elements 11a, 11b, arranged side by side, of the power receiving equipment move in a direction from +X toward -X so as to become superposed on the power transmission elements 21a, 21b of the power transmission equipment, thereby approaching the power transmission element 21. And, firstly, the magnets 18d, 18e provided around the power receiving element 11b, which is one of the power receiving elements, of the mobile object 10 are coupled to the magnets 33d, 33e on the power transmission element 21 side, respectively (at this time, since the magnets 18d, 18e have the same polarity as that of the magnets 33a, 33h, the magnets 18d, 18e are not coupled thereto). Thereby, the shield 31 starts to slide with the movement of the mobile object 10. Then, at the position at which the power receiving element 11a, which is the other of the power receiving elements, is superposed right over the other power transmission element 21a, the shielding effect for the electromagnetic wave by the shield 31 is released at the highest possible degree. As such, according to the present configuration, wireless power transfer can efficiently be performed from the power transmission element 21 to the power receiving element 11.

Note that the shapes and sizes of the power receiving element 11 and the power transmission element 21 are not limited to those illustrated in the drawing. For example, the power transmission elements 21 having radiating surfaces of the same shape and size may be provided to the shields 31a-31d, respectively (i.e., a total of four of the power transmission elements 21 are provided). With such a configuration, in both the X-axis direction and the Y-axis direction, the operation and effect similar to those in the above description can be achieved. Further, in this third embodiment, the numbers, shapes, sizes, and arrangements of the magnet 18 and the magnet 33 are not limited to those illustrated in the drawing.

### [Fourth Embodiment]

A fourth embodiment is another configuration of a wireless power transfer system 1 which is configured such that shielding of a power transmission element 21 can be released even in cases where a mobile object 10 approaches a power transmission element 21 from various directions, similarly to the second embodiment.

Fig. 8 is a diagram illustrating a schematic configuration of the wireless power transfer system 1 which will be described as the fourth embodiment, and is the diagram of a configuration, seen from above, around the power transmission element 21 and a shield 31.

As illustrated in the drawing, the shield 31 in this wireless power transfer system 1 is in a substantially circular shape, and a plurality of magnets 33 are provided along the periphery thereof. In this example, four magnets 33a-33d are provided at locations, in the periphery of the shield 31, at the same distance from the center of the shield 31 (the center of the circle) toward four directions in straight lines. An urging mechanism not shown is provided to the shield 31, the shield 31 is configured to be urged in a direction in which the electromagnetic wave radiated from the power transmission element 21 is shielded at the highest possible degree (a direction in which the center of the shield 31 is directed to the center of the power transmission element 21).

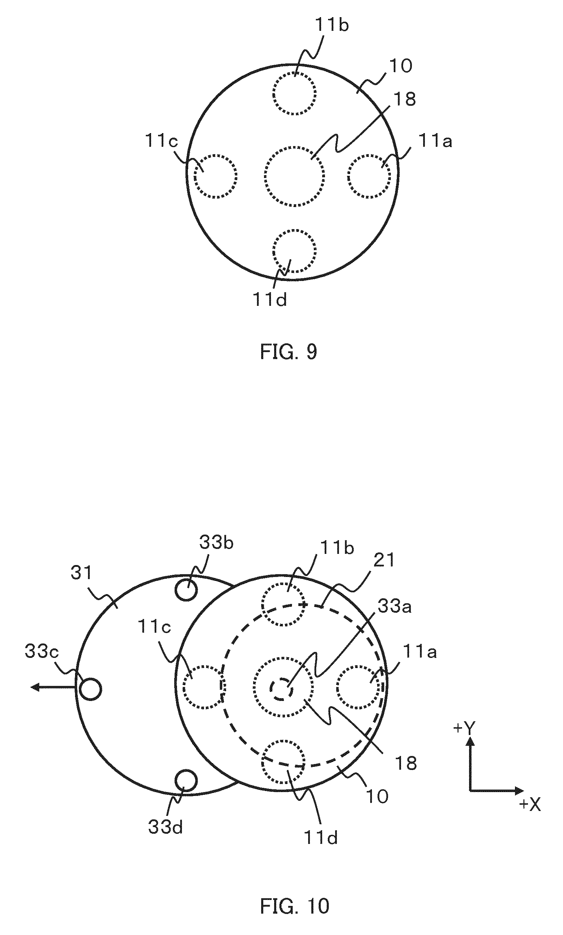

Fig. 9 is a diagram of a configuration, when seen from above the mobile object 10, around a power receiving element 11 in the wireless power transfer system 1 illustrated as the fourth embodiment.

As illustrated in the drawing, a plurality of the power receiving elements 11 are provided around a magnet 18 of the mobile object 10. In this example, four power receiving elements 11a-11d are provided at locations at the same distance from the center of the magnet 18 toward four directions in straight lines (the distances between the center of the magnet 18 and the centers of the four power receiving elements 11a-11d are the same). Further, the distances between the center of the magnet 18 and the centers of the four power receiving elements 11a-11d are equal to or smaller than the maximum diameter of the electromagnetic-wave radiating surface in the power transmission element 21.

As illustrated in Fig. 10, when the mobile object 10 approaches the power transmission element 21, the magnet 18 provided to the mobile object 10 and the magnet 33a provided to the shield 31 are coupled to each other, to couple the shield 31 with the mobile object 10, and thereafter, the shield 31 starts to slide with the movement of the mobile object 10, thereby releasing shielding of the electromagnetic wave near the power receiving element 11a, and wireless power transfer is performed from the power transmission element 21 to the power receiving element 11a. Note that, although received power is smaller than that in the power receiving element 11a, the power receiving elements 11b, 11d can also receive wireless power transfer from the power transmission element 21, since parts of the power receiving surfaces thereof are overlapped with the radiating surface of the power transmission element 21.

As described above, with the wireless power transfer system 1 according to the fourth embodiment, shielding of the electromagnetic wave by the shield 31 can automatically be released, in cases where the mobile object 10 approaches the power transmission element 21 from various directions. Thus, it is possible to reliably shield the electromagnetic wave at normal times, and reliably perform wireless power transfer when the mobile object 10 approaches the power transmission element 21.

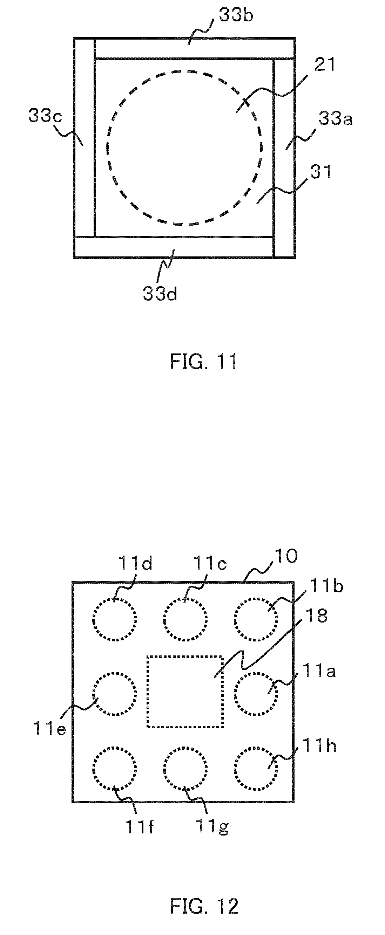

Note that the shapes and sizes of the power receiving element 11 and the power transmission element 21 are not limited to those illustrated in the drawing. Further, the numbers, the shapes, the sizes, and the arrangements of the magnet 18 and the magnets 33 are not limited to those illustrated in the drawing. For example, as illustrated in Fig. 11, a shield 31 may have a rectangular shape. Further, in this case, as illustrated in the drawing, magnets 33 may be arranged along the periphery of the shield 31 so as to form a rectangular shape as a whole. Further, in this case, for example, as illustrated in Fig. 12, a plurality of power receiving elements 11a-11h may be arranged around a magnet 18 so as to form a rectangular shape as a whole.

The descriptions of embodiments as described above are simply for facilitating the understanding of the present disclosure and are not in any way to be construed as limiting the present disclosure. The present disclosure may variously be changed or altered without departing from its spirt and encompass equivalents thereof.

### [Reference Signs List]

1 wireless power transfer system, 5 movement surface, 10 mobile object, 11 power receiving element, 12 charging circuit, 13 secondary battery, 14 load, 18 magnet, 21 power transmission element, 22 power transmission supply device, 31 shield, 32 slide mechanism, 33 magnet.

## Claims

1. A wireless power transfer system comprising:
a power receiving element provided to a mobile object and configured to receive power transmitted through wireless power transfer, the mobile object being configured to move along a movement surface;
a power transmission element embedded on a movement surface side and configured to transmit the power;
a shield provided in a manner slidable along the movement surface so as to shield an electromagnetic wave radiated from the power transmission element;
a first magnet provided to the shield;
an urging mechanism configured to urge the shield to slide in a direction in which a shielding effect for the power transmission element is increased; and
a second magnet provided to the mobile object at a predetermined distance from the power receiving element, the second magnet being configured to, when the mobile object approaches the power transmission element, become coupled to the first magnet, to couple the mobile object and the shield together.

2. The wireless power transfer system according to claim 1, wherein
the first magnet is provided near a periphery of the shield, and
the predetermined distance between the second magnet and the power receiving element is at least equal to or greater than a maximum diameter of an electromagnetic wave radiating surface of the power transmission element.

3. The wireless power transfer system according to claim 1 or 2, further comprising:
a power transmission supply device configured to supply power to the power transmission element only when an amount of sliding of the shield exceeds a predetermined threshold, the shield being configured to slide against the urging force with a movement of the mobile object.

4. The wireless power transfer system according to any one of claims 1 to 3, further comprising:
a plurality of shields provided in a manner slidable in directions different from one another, the shield including the plurality of shields.

5. The wireless power transfer system according to claim 1, wherein
a plurality of first magnets are provided near a periphery of the shield, the first magnet including the plurality of first magnets,
a plurality of power receiving elements are provided around the second magnet of the mobile object, the power receiving element including the plurality of power receiving elements, and the predetermined distance between the second magnet and each of the power receiving elements is equal to or smaller than a maximum diameter of an electromagnetic wave radiating surface of the power transmission element.

6. A wireless power transfer method comprising:
employing a wireless power transfer system including a power receiving element provided to a mobile object and configured to receive power transmitted through wireless power transfer, the mobile object being configured to move along a movement surface, a power transmission element embedded on a movement surface side and configured to transmit the power, a shield provided in a manner slidable along the movement surface so as to shield an electromagnetic wave radiated from the power transmission element, a first magnet provided to the shield, an urging mechanism configured to urge the shield to slide in a direction in which a shielding effect for the power transmission element is increased, and a second magnet provided to the mobile object at a predetermined distance from the power receiving element; and
when the mobile object approaches the power transmission element, coupling the second magnet to the first magnet, to couple the mobile object and the shield together.

7. The wireless power transfer method according to claim 6, wherein
the first magnet is provided near a periphery of the shield, and
the predetermined distance between the second magnet and the power receiving element is at least equal to or greater than a maximum diameter of an electromagnetic wave radiating surface of the power transmission element.

8. The wireless power transfer method according to claim 6 or 7, further comprising:
supplying power to the power transmission element only when an amount of sliding of the shield exceeds a predetermined threshold, the shield being configured to slide against the urging force with a movement of the mobile object.

9. The wireless power transfer method according to any one of claims 6 to 8, wherein
a plurality of shields provided in a manner slidable in directions different from one another are further included, the shield including the plurality of shields.

10. The wireless power transfer method according to claim 6, wherein
a plurality of first magnets are provided near a periphery of the shield, the first magnet including the plurality of first magnets,
a plurality of power receiving elements are provided around the second magnet of the mobile object, the power receiving element including the plurality of power receiving elements, and the predetermined distance between the second magnet and each of the power receiving elements is equal to or smaller than a maximum diameter of an electromagnetic wave radiating surface of the power transmission element.
